# EUROPEAN PATENT SPECIFICATION

(11) **EP 4 675 174 B1**
(45) Date of publication and mention of the grant of the patent: **28.10.2026**
(21) Application number: 25185232.3
(22) Date of filing: 25.06.2025
(51) Int. Cl.: F23R 3/00, F01D 9/02

(54) **COMBUSTOR AND GAS TURBINE INCLUDING THE SAME**
BRENNKAMMER UND GASTURBINE DAMIT
CHAMBRE DE COMBUSTION ET TURBINE À GAZ COMPRENANT CELLE-CI

(30) Priority: 03.07.2024 KR 20240087354
(43) Date of publication of application: 07.01.2026
(73) Proprietor: Doosan Enerbility Co., Ltd., Seongsan-gu Changwon-si, Gyeongsangnam-do 51711 (KR)
(72) Inventor: Shershnyov, Borys, 51632 Changwon-si, Gyeongsangnam-do (KR)
(74) Representative: BCKIP Part mbB

(56) References cited:
- EP-A2- 2 226 564
- EP-A2- 2 481 983
- EP-A2- 2 532 962
- US-A1- 2011 214 429
- US-A1- 2023 167 747

## Description

This application claims priority to and the benefit of Korean Patent Application No. 10-2024-0087354 filed in the Korean Intellectual Property Office on July 3, 2024.

### TECHNICAL FIELD

The present invention relates to a combustor. More specifically, the present invention relates to a combustor, which is configured to form a turbulent flow in a cooling flow path configured to cool a liner of a combustor.

### BACKGROUND ART

A gas turbine refers to a power engine that mixes compressed air, which is compressed by a compressor, with fuel, combusts the air-fuel mixture, and rotates a turbine with a high-temperature gas produced by the combustion. The gas turbines are used to operate generators, aircraft, ships, trains, and the like.

In general, the gas turbine includes a compressor, a combustor, and a turbine. The compressor sucks and compresses outside air and transmits the compressed air to the combustor. The air compressed by the compressor is in a high-pressure, high-temperature state. The combustor mixes the compressed air, which is introduced from the compressor, with fuel and combusts the air-fuel mixture. The combustion gas generated by the combustion is discharged to the turbine. Turbine blades in the turbine are rotated by the combustion gas, thereby generating power. The generated power is used in various fields such as power generation and operations of mechanical devices.

A combustion chamber of the combustor may be exposed to a high-temperature environment. A liner, which defines the combustion chamber, needs to be prevented from being melted or damaged by a high temperature in the combustion chamber. To this end, a cooling flow path, through which a cooling fluid may flow, may be provided outside the liner in order to cool the liner. The cooling fluid, particularly air, which passes through the cooling flow path, may move to the combustion chamber and supply oxygen required for combustion.

However, in case that an excessively large amount of air is provided to the cooling flow path, a part of the air, which needs to be used to generate electric power in the turbine, is allowed to flow to the cooling flow path and serve as the cooling fluid. For this reason, there may occur a problem in that the amount of power generation decreases. Further, in case that an excessively large amount of air is introduced into the combustion chamber, a large amount of nitrogen oxide (NOx) is produced, which contaminates the environment.

EP 2 226 564 A2 discloses a system that includes a turbine combustor liner. The combustor liner includes a patterned surface at a downstream end portion relative to a downstream direction of combustion along a longitudinal axis of the turbine combustor liner. The patterned surface includes a plurality of discrete protrusions in both axial and circumferential directions about the downstream end portion relative to the longitudinal axis of the turbine combustion liner.

EP 2 481 983 A2 discloses a turbine that includes a transition portion where a combustor section joins a transition piece. The combustor section includes a combustor liner having an aft end that joins a transition piece body of the transition piece. A reduced thickness portion at the aft end of the combustor liner is covered by a cover sleeve to form an air flow passage on the aft end of the combustor liner. Apertures in the forward portion of the cover sleeve allow cooling air to flow into air flow passage. A plurality of turbulators project radially outward from the reduced thickness portion of the combustor sleeve towards said cover sleeve.

### SUMMARY OF THE INVENTION

The present invention has been made in an effort to improve cooling efficiency of a cooling fluid flowing along a cooling flow path. The present invention has also been made in an effort to reduce the amount of production of nitrogen oxide by reducing the amount of a cooling fluid flowing along a cooling flow path.

Technical problems to be solved by the present document are not limited to the above-mentioned technical problems, and other technical problems, which are not mentioned above, may be clearly understood from the following descriptions by those skilled in the art to which the present invention pertains.

To this end, the present invention provides a combustor in accordance with claim 1.

A combustor according to the present invention includes: a liner configured to define a combustion chamber and extending in a longitudinal direction; a transition piece configured to overlap an end of the liner while being spaced apart from the end of the liner at a predetermined spacing distance, the transition piece extending in the longitudinal direction of the liner; and a shroud disposed between the liner and the transition piece and coupled to the liner, in which the liner and an inner surface of the shroud define a cooling flow path, and in which the cooling flow path is formed with a turbulator to allow the air, which flows in the cooling flow path, to flow as a turbulent flow in order to dissipate heat from the liner.

The turbulator may protrude from the liner or the inner surface of the shroud toward the cooling flow path.

The turbulator may be included in the liner, the liner may include a flow path forming portion configured to define the cooling flow path, and the turbulator may protrude from the flow path forming portion.

The turbulator may be formed to protrude perpendicularly to a longitudinal direction of the cooling flow path.

The turbulator may be provided as a plurality of turbulators arranged at predetermined intervals in a longitudinal direction of the cooling flow path.

When a length by which each of the plurality of turbulators protrudes may be defined as e, and an interval between the plurality of turbulators may be defined as p, a ratio of e to p may be 8 or more and 10 or less.

According to the invention, the shroud includes a swirler in an inlet flow path to form a swirl in the inlet flow path, which communicates with an inlet of the cooling flow path.

An inner surface of the swirler may define the inlet flow path, and the inlet flow path may have a longitudinal direction inclined with respect to an extension direction of the cooling flow path.

The inlet flow path may have an extension direction that is a direction made by combining two directions perpendicular to a longitudinal direction of the cooling flow path.

According to the invention, a distance between two farthest points on a cross-sectional area of the swirler are equal to or larger than a height of the cooling flow path.

An outlet flow path of the cooling flow path may extend in a longitudinal direction of the cooling flow path.

At least a part of the cooling flow path may have a section in which a cross-sectional area decreases in a direction from an upstream side to a downstream side based on a direction in which a cooling fluid configured to flow along the cooling flow path flows in the cooling flow path.

The section in which the cross-sectional area of the cooling flow path decreases may be provided by forming a stepped portion.

The turbulator may protrude from the liner or the inner surface of the shroud toward the cooling flow path, in which the section in which the cross-sectional area of the cooling flow path decreases corresponds to a section in which the turbulator is formed.

The combustor may further include: a strut disposed at a rear side of the liner and between the shroud and the liner and configured to support the shroud and the liner.

In a combustor according to another embodiment at least a part of the cooling flow path has a section in which a cross-sectional area gradually decreases in a direction from an upstream side to a downstream side.

The section in which the cross-sectional area of the cooling flow path decreases may be provided by forming a stepped portion.

The combustor may further include: a turbulator protruding from the liner or the inner surface of the shroud toward the cooling flow path, in which the section in which the cross-sectional area of the cooling flow path decreases corresponds to a section in which the turbulator is formed.

The shroud may include a swirler in an inlet flow path to form a swirl in the inlet flow path, which communicates with an inlet of the cooling flow path.

A gas turbine may include: a compressor; a turbine configured to produce electric power by using air compressed by the compressor; and a combustor configured to combust the air compressed by the compressor, in which the combustor includes: a liner configured to define a combustion chamber and extending in a longitudinal direction; a transition piece configured to overlap an end of the liner while being spaced apart from the end of the liner at a predetermined spacing distance, the transition piece extending in the longitudinal direction of the liner; and a shroud disposed between the liner and the transition piece and coupled to the liner, in which the liner and an inner surface of the shroud define a cooling flow path, and in which the cooling flow path is formed with a turbulator to allow the air, which flows in the cooling flow path, to flow as a turbulent flow in order to dissipate heat from the liner.

According to the combustor according to the embodiment of the present invention, the cooling flow path configured to form a turbulent flow is formed, which may improve the efficiency in cooling the liner.

According to the combustor according to the embodiment of the present invention, the cooling flow path with the improved cooling efficiency may allow a small amount of air to flow to the combustion chamber, which may reduce the production of nitrogen oxide.

According to the combustor according to the embodiment of the present invention, the cooling flow path having the cross-sectional area, which decreases in the flow direction, is formed, which may reduce the amount of air flowing to the combustion chamber.

The gas turbine according to the embodiment of the present invention includes the above-mentioned combustor, thereby obtaining the above-mentioned effects.

The effects obtained by the present invention are not limited to the aforementioned effects, and other effects, which are not mentioned above, will be clearly understood by those skilled in the art from the following description.

### BRIEF DESCRIPTION OF THE DRAWINGS

FIG. 1 is a cross-sectional view of a gas turbine.
FIG. 2 is a cross-sectional view of a combustor illustrated in FIG. 1.
FIG. 3 is a cross-sectional perspective view of a comparative example of a part corresponding to a rear end portion of a liner in the combustor illustrated in FIG. 2.
FIG. 4 is an enlarged cross-sectional view illustrating the liner and a shroud at the rear end portion of the liner in the combustor illustrated in FIG. 2.
FIG. 5 is an enlarged perspective view illustrating an end of the liner and an end of the shroud illustrated in FIG. 4.
FIG. 6 is a cross-sectional perspective view made by cutting the liner and the shroud, which are illustrated in FIG. 4, in a longitudinal direction of an inlet flow path.
FIG. 7 is an enlarged cross-sectional view illustrating a turbulator illustrated in FIG. 4.
FIG. 8 is a graph related to cooling efficiency with respect to protruding heights of and intervals between a plurality of turbulators illustrated in FIG. 7.
FIG. 9 is a cross-sectional view illustrating a liner and a shroud according to a second embodiment of the present invention.
FIG. 10 is a cross-sectional view illustrating a liner and a shroud according to a third embodiment of the present invention.
FIG. 11 is a cross-sectional view illustrating a liner and a shroud according to a fourth embodiment of the present invention.
FIG. 12 is a cross-sectional view illustrating a liner and a shroud according to a fifth embodiment of the present invention.
FIG. 13 is a cross-sectional view illustrating a liner and a shroud according to a sixth embodiment of the present invention.
FIG. 14 is a cross-sectional view illustrating a liner and a shroud according to a seventh embodiment of the present invention.

### DETAILED DESCRIPTION

Hereinafter, exemplary embodiments of the present invention will be described in detail with reference to the accompanying drawings so that those with ordinary skill in the art to which the present invention pertains may easily carry out the embodiments. However, the present invention may be implemented in various different ways and is not limited or restricted by the embodiments described herein.

A part irrelevant to the description will be omitted to clearly describe the present invention. Further, the specific descriptions of publicly known related technologies will be omitted when it is determined that the specific descriptions may unnecessarily obscure the subject matter of the present invention. In assigning reference numerals to constituent elements of the respective drawings in the present specification, the same or similar constituent elements will be designated by the same or similar reference numerals throughout the specification.

In addition, terms or words used in the specification and the claims should not be interpreted as being limited to a general or dictionary meaning.

Various embodiments of the present document and the terms used in the embodiments are not intended to limit the technical features disclosed in the present document to the particular embodiments and should be understood as including various alterations, equivalents, or alternatives of the corresponding embodiments.

In connection with the description of the drawings, the same or similar reference numerals may be used for the similar or relevant components.

A singular form of a noun corresponding to an item may include one or more of the items, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases.

The term "and/or" includes any and all combinations of a plurality of related and listed components.

As used herein, such terms as "1st" and "2nd," or "first" and "second" may be used to simply distinguish a corresponding component from another, and does not limit the components in other aspect (e.g., importance or order).

If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The terms "including" and "having" are intended to designate the existence of characteristics, numbers, steps, operations, constituent elements, and components described in the present document or a combination thereof, and do not exclude a possibility of the existence or addition of one or more other characteristics, numbers, steps, operations, constituent elements, and components, or a combination thereof in advance.

When one constituent element is "connected to," coupled to," "supported on," or "in contact with" another constituent element, the constituent elements may be directly connected to, coupled to, supported on, or in contact with each other, and one constituent element may be indirectly connected to, coupled to, supported on, or in contact with another constituent element by means of a third constituent element.

When one constituent element is positioned "on" another constituent element, one constituent element may adjoin another constituent element, and still another constituent element may be present between the two constituent elements.

Meanwhile, the terms "upward/downward direction," "lower side," "forward/rearward direction," and the like used in the following description are defined based on the drawings and the description provided in this specification, and shapes and positions of the constituent elements are not limited by the terms.

Hereinafter, embodiments according to the present invention will be described in detail with reference to the accompanying drawings.

### First Embodiment

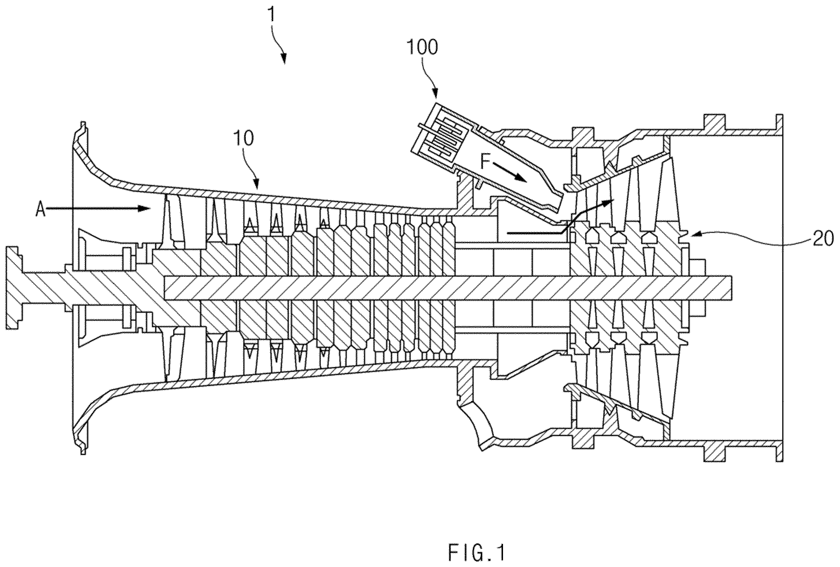

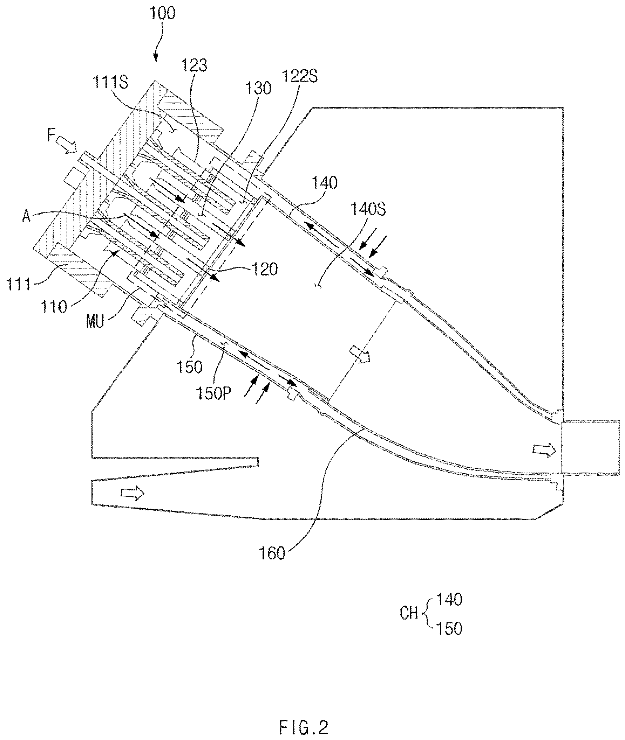

FIG. 1 is a cross-sectional view of a gas turbine 1. FIG. 2 is a cross-sectional view of a combustor 100 illustrated in FIG. 1.

The gas turbine 1 may be used to generate electric power. The gas turbine 1 may generate power by means of combustion of gas. A thermodynamic cycle of the gas turbine 1 may ideally follow the Brayton cycle. The Brayton cycle includes four processes including isentropic compression (adiabatic compression), isobaric heating, isentropic expansion (adiabatic expansion), and isobaric heat dissipation. That is, this cycle may suck atmospheric air, compress the air into high-pressure air, combust fuel in a constant-pressure environment, release heat energy generated by combustion, expand high-temperature combustion gas to generate kinetic energy, and then release exhaust gas containing residual energy into the atmosphere. That is, the cycle may include four processes including compression, heating, expansion, and heat dissipation.

As illustrated in FIG. 1, the gas turbine 1, which realizes the Brayton cycle, may include a compressor 10, the combustor 100, and a turbine 20. The following description will be described with reference to FIG. 1. However, the description of the present invention may also be widely applied to various turbine engines that are equivalent in configuration to the gas turbine 1 exemplarily illustrated in FIG. 1.

With reference to FIG. 1, the compressor 10 of the gas turbine 1 may suck air from the outside and compress the air. The compressor 10 may supply compressed air, which is compressed by compressor blades of the compressor 10, to the combustor 100 and supply cooling air to a high-temperature region of the gas turbine 1 required to be cooled. In this case, the sucked air undergoes an adiabatic compression process in the compressor 10, such that the air having passed through the compressor 10 increases in pressure and temperature.

The compressor 10 is designed as a centrifugal compressor 10 or an axial compressor 10. The centrifugal compressor 10 is typically applied to a small-scale gas turbine 1. In contrast, because the large-scale gas turbine 1 illustrated in FIG. 1 needs to compress a large amount of air, the large-scale gas turbine 1 generally adopts a multi-stage axial compressor 10. In this case, in the multi-stage axial compressor 10, the compressor blades of the compressor 10 compresses the introduced air while being rotated by a rotation of a rotor disc and moves the compressed air to a rear end thereof. The air is gradually compressed into the air with higher pressure while passing over the compressor blades of the compressor 10 that are provided in multiple stages.

The compressor 10 may operate using a part of power outputted from the turbine 20. To this end, as illustrated in FIG. 1, a rotary shaft of the compressor 10 and a rotary shaft of the turbine 20 may be connected directly to each other. In the case of the large-scale gas turbine 1, approximately half of the output produced by the turbine 20 may be consumed to operate the compressor 10. Therefore, the improvement in the efficiency of the compressor 10 directly affects the improvement in overall efficiency of the gas turbine 1.

The turbine 20 may generate power using gas produced by combustion in the combustor 100. The gas, which moves in the turbine 20, may rotate turbine blades of the turbine 20, thereby generating electric power.

The combustor 100 may mix the compressed air, which is supplied from an outlet of the compressor 10, with fuel and combust the air-fuel mixture under an isobaric condition, thereby producing high-energy combustion gas. As illustrated in FIG. 2, the combustor 100 may include nozzles 110, a nozzle housing 111, and/or a housing of the combustor 100.

The nozzle housing 111 may accommodate the nozzle 110 while surrounding the nozzle 110. The nozzle housing 111 may have an approximately circular cylindrical shape. The nozzle 110 may be positioned at a downstream side of the compressor 10 and disposed along the nozzle housing 111 having an annular shape. The fuel and the air, which are mixed at an appropriate ratio, are injected from the nozzle 110, such that the fuel and the air may be suitable for combustion. That is, the nozzle 110 may be configured to produce a flame. Further, the nozzle housing 111 may define an air chamber configured such that air is introduced into the air chamber. More specifically, as described below, the air, which moves along an outer surface of the housing of the combustor 100 from the compressor 10, may be introduced into the air chamber of the nozzle housing 111. The air introduced into the air chamber may be supplied to the nozzle 110 and mixed with air so that the nozzle 110 produces a flame. Further, the air introduced into the air chamber moves toward an effusion plate positioned at a downstream side of the air chamber and will be described below. The air may cool the effusion plate.

The housing of the combustor 100 may define therein a combustion chamber 140S in which a combustion reaction occurs to combust the gas. Further, the housing of the combustor 100 may connect the nozzle 110 and the turbine 20 and transmit the gas, which has been combusted by the nozzle 110, to the turbine 20. The housing of the combustor 100 may connect the nozzle 110 and the turbine 20, such that a high-temperature combustion gas may flow in the housing of the combustor 100. In this case, the compressed air flows along the outer surface of the housing of the combustor 100 and is supplied to the nozzle 110. During this process, the housing of the combustor 100, which is heated by the high-temperature combustion gas, may be appropriately cooled. Additionally, in this case, the compressed air may be understood as a cooling fluid in addition to serving as a combustion reactant.

More specifically, the housing of the combustor 100 may include a liner 140 configured to define the combustion chamber 140S, and a transition piece 160 (see FIG. 2) configured to move and guide the flame, which is produced in the combustion chamber 140S and propagates, toward the turbine 20. That is, the liner 140 may be positioned adjacent to the nozzle 110 and positioned at an upstream side based on a direction in which the flame propagates. The transition piece 160 may be configured to be positioned at a downstream side of the liner 140. In other words, the liner 140 may define the combustion chamber 140S and extend in a longitudinal direction. The transition piece 160 may overlap an end of the liner 140 while being spaced apart from the end of the liner 140 at a predetermined spacing distance. The transition piece 160 may extend in the longitudinal direction of the liner 140. Because the liner 140 and the transition piece 160 are positioned inside the housing of the combustor 100, the liner 140 and the transition piece 160 may be referred to as inner housings. Additionally, the liner 140 and the transition piece 160 may extend in the longitudinal direction while having circular cross-sections. That is, it can be seen that the liner 140 and the transition piece 160 have tubular shapes.

In the tubular shape of the liner 140, the longitudinal direction may mean the extension direction of the liner 140 along the flow of the combustion gas from the nozzles toward the transition piece 160. In the longitudinal direction of the liner 140, the direction toward the nozzles from the transition piece may be referred to as a front side of the longitudinal direction while the opposite direction may be referred to as a rear side of the longitudinal direction. Also, a direction along the circular peripheral of the liner 140 may be referred to as a circumferential direction, and a direction from the center of the combustion chamber 140S toward the circular peripheral of the liner 140 may be referred to as a radial direction. The radial direction may be perpendicular to the longitudinal direction and the circumferential direction.

The housing of the combustor 100 may include a flow sleeve 150 provided outside the liner 140 and the transition piece 160 and configured to cover the liner 140 and the transition piece 160. The flow sleeve 150 may be spaced apart from the liner 140 and the transition piece 160 at a predetermined distance. A flow path is formed between the flow sleeve 150 and the liner 140 or between the flow sleeve 150 and the transition piece 160. As described above, the compressed air flows along the flow path, such that the compressed air may cool the liner 140 and/or the transition piece 160. In this case, a part of the compressed air compressed by the compressor 10 may be discharged and then move to the flow path, which is formed between the flow sleeve 150 and the liner 140 or between the flow sleeve 150 and the transition piece 160, through a hole formed in the flow sleeve 150. In particular, because the liner 140 and the transition piece 160 are the parts that come into contact with the flame formed by the combustion of fuel injected from the nozzle 110, temperatures of the liner 140 and the transition piece 160 may rise. Therefore, the liner 140 and the transition piece 160 may need to be cooled. The liner 140 and the transition piece 160 may be made of a metallic material. In this case, the metal may melt when the temperature of the metal reaches or exceeds a melting point. A temperature equal to or lower than the melting point may need to be maintained so that the liner 140 and the transition piece 160 retain original shapes.

In particular, because a rear end portion (i.e., downstream end portion) of the liner 140 is a portion where the flame matures, the problem of temperature increase due to the flame may be most severe at the rear end portion of the liner 140. Therefore, the rear end portion of the liner 140 may need intensive cooling. A configuration for cooling the liner 140 will be described below more in detail.

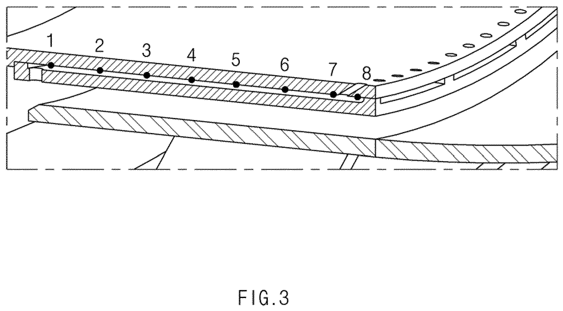

FIG. 3 is a cross-sectional perspective view of a comparative example (i.e. a conventional system) of a part corresponding to the rear end portion of the liner illustrated in FIG. 2.

The comparative example will be described with reference to FIG. 3. The following description of the comparative example is provided to facilitate the understanding of the invention of the present invention. Therefore, the description of the comparative example is not intended to limit the scope of protection of the present invention or to preclude any part from being used as an embodiment.

Further, in the following description, components corresponding to those of the embodiment of the present invention will be described using the same reference description as those of the embodiment of the present invention. Therefore, the components of the comparative example will be described without assigning separate reference numerals.

In order to cool the rear end portion of the liner, a portion where the liner and the transition piece overlap may be provided. This portion may be referred to as a shroud. Therefore, the compressed air, which moves along the liner and the outer surface of the transition piece, may flow between the liner and the transition piece. Because a portion between the liner and the transition piece may be a portion corresponding to the rear end portion of the liner, the flow of the compressed air in the portion between the liner and the transition piece may assist in transferring heat away from the rear end portion of the liner. In particular, because moving air transfers more heat than stationary air, generating airflow in a portion adjacent to the rear end portion of the liner may help dissipate heat from the rear end portion of the liner.

Here, the shroud may be provided adjacent to the rear end portion of the liner and forms a cooling flow path, through which the cooling fluid flows, between the shroud and the rear end portion of the liner. The shroud may be disposed between the liner and the transition piece and coupled to the liner. The liner and an inner surface of the shroud may define the cooling flow path. Because the cooling flow path extends along the outer surface of the liner, the cooling fluid flowing along the cooling flow path may assist in dissipating heat from the outer surface of the liner. In this case, a portion, referred to as the rear end portion of the liner in the above-mentioned description, i.e., a portion, which contributes to forming the cooling flow path, may also be referred to as a flow path forming portion. The liner may include a flow path forming portion configured to define the cooling flow path.

The shroud may include an inlet flow path connected to an inlet of the cooling flow path. The inlet flow path may extend downward based on FIG. 3 (i.e., in the radial direction). The shroud may define an outlet flow path connected to an outlet of the cooling flow path. For example, based on FIG. 3, the outlet flow path may include a first outlet flow path extending in the longitudinal direction of the liner, and a second outlet flow path extending upward (i.e., radially inward) and toward the combustion chamber. The cooling fluid may flow sequentially through the inlet flow path, the cooling flow path, and the outlet flow path.

With reference to FIG. 3, dots are depicted in the flow path forming portion of the liner. An experiment was conducted to measure temperatures at points corresponding to the dots on the flow path forming portion. The result of the experiment is summarized in the following table on the assumption that the dots are denoted by 1 to 8 along a direction from the left side to the right side based on FIG. 3.

The environmental conditions under which the experiment was performed are as follows.

A turbine inlet temperature (TIT) is 1,650°C, and a temperature of the cooling fluid introduced into the inlet flow path is 493°C. In this case, a target temperature of the liner cooled by the cooling flow path in consideration of a melting point of metal is 815°C. A thickness of thermal barrier coating (TBC) is 1.5 mm. Thermal conductivity of the TBC is 1.2 W/m/C. A mass flow rate of the compressed air used as the cooling fluid is 1.213kg/s.

**[Table 1]**

| Dot number | 1 | 2 | 3 | 4 | 5 | 6 | 7 | 8 |
|---|---|---|---|---|---|---|---|---|
| Temperat ure (°C) | 644 | 725 | 775 | 810 | 832 | 845 | 854 | 864 |

With reference to the result, it can be seen that certain regions have temperatures exceeding the targeted temperature of the liner, which is 815°C. This may cause the following three problems.

First, the temperature of the liner is close to the melting point, which may cause problems such as melting or thermal deformation. Second, the temperature distribution of the liner is steep, which may cause warping due to differences in the amount of deformation at each temperature. Third, if a larger amount of compressed air is allowed to flow through the cooling flow path to resolve the problem, a greater amount of air is injected into the combustion chamber because the compressed air is eventually supplied to the combustion chamber. The increased amount of air may result in in increased production of nitrogen oxide.

The embodiment of the present invention, which addresses these problems, will be described below. Before doing so, an experimental result comparing the first embodiment of the present invention to the comparative example is provided below. The mass flow rate of the compressed air used as the cooling fluid in the first embodiment is 0.8873 kg/s, which is lower than that used in the comparative example. In the first embodiment, the mass flow rate of the compressed air is numerically less by 0.3257 kg/s than the mass flow rate in the comparative example, and the compressed air is used 0.706 times that used in the comparative example. Further, the cooling effect achieved with the lower mass flow rate is greater, as shown below.

**[Table 2]**

| Dot number | 1 | 2 | 3 | 4 | 5 | 6 | 7 | 8 | Average temperat ure |
|---|---|---|---|---|---|---|---|---|---|
| Temperat ure (°C) | 644 | 725 | 775 | 810 | 832 | 845 | 854 | 864 | 794 |
| Temperat ure (°C) | 750 | 759 | 756 | 731 | 726 | 717 | 698 | 724 | 733 |

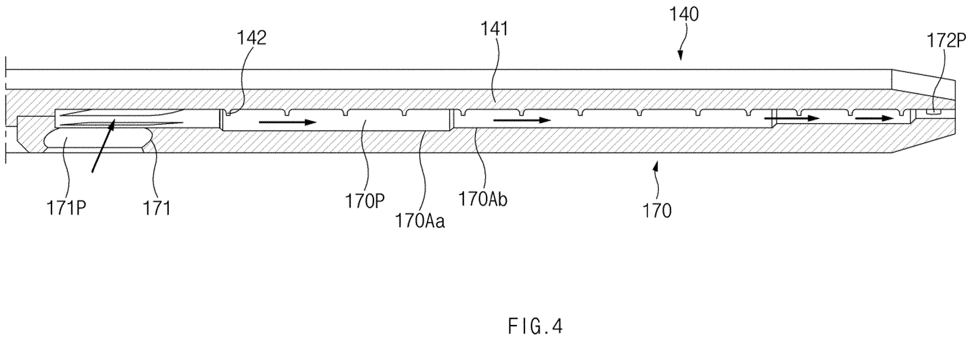

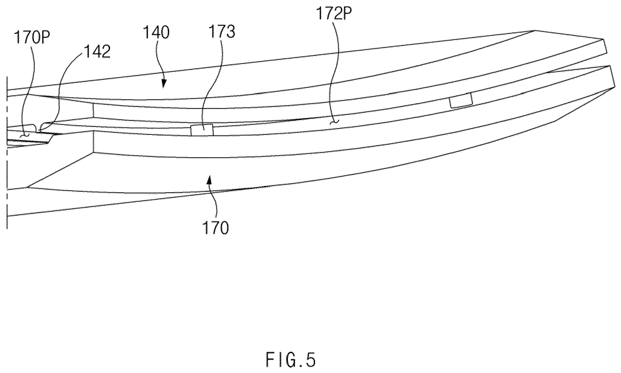

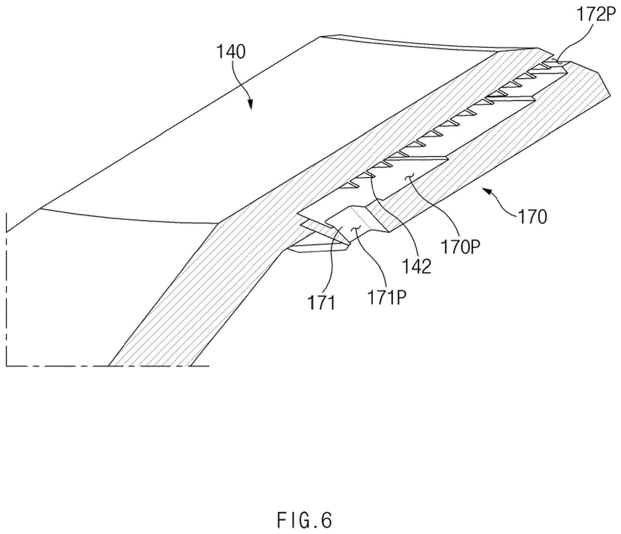

FIG. 4 is an enlarged cross-sectional view illustrating the liner and the shroud at the rear end portion of the liner illustrated in FIG. 2 according to an embodiment of the present invention. FIG. 5 is an enlarged perspective view illustrating the liner 140 and an end of a shroud 170 illustrated in FIG. 4. FIG. 6 is a cross-sectional perspective view made by cutting the liner 140 and the shroud 170, which are illustrated in FIG. 4, in a longitudinal direction of an inlet flow path 171P.

With reference to FIGS. 4 to 6, the liner 140 and the shroud 170 according to the embodiment of the present invention will be described.

The overlapping parts, which have been described in the comparative example, will be described again to clearly describe the embodiment of the present invention.

The combustor 100 includes the liner 140 configured to define the combustion chamber 140S and extending in the longitudinal direction. The combustor 100 includes the transition piece 160 that overlaps the end of the liner 140 while being spaced apart from the end of the liner 140 at a predetermined spacing distance. The transition piece 160 extends in the longitudinal direction of the liner 140. The combustor 100 includes the shroud 170 disposed between the liner 140 and the transition piece 160 and coupled to the liner 140. The liner 140 and the inner surface of the shroud 170 may define a cooling flow path 170P.

In order to solve the above-mentioned problems, the cooling efficiency of the cooling fluid flowing along the cooling flow path 170P may be improved. To this end, the cooling flow path 170P is configured so that the air flowing in the cooling flow path 170P flows as a turbulent flow to dissipate heat from the liner 140. The flow may be classified as a laminar flow or a turbulent flow. The turbulent flow may provide significantly improved heat transfer compared to the laminar flow. The flow of air before entering the cooling flow path 170P may be configured as a laminar flow, to minimize energy loss. Only the direct flow, which cools the liner 140, may be configured as a turbulent flow, thereby significantly improving the cooling efficiency of the liner 140. The present invention may include all the flows as long as the flow of the cooling fluid flowing along the cooling flow path 170P is configured as the turbulent flow.

The first embodiment of the present invention may include the following configurations to implement the turbulent flow in the cooling flow path 170P. The first configuration is a turbulator 142 protruding toward the cooling flow path 170P. The second configuration is a swirler 171 configured to generate a swirl in the inlet flow path 171P. The third configuration is a stepped portion formed to reduce the number of cross-sections of the flow path. Because the reduction in the number of cross-sections of the flow path needs to be described in connection with the following configuration for supplying a smaller amount of air to the combustion chamber 140S, this will be described in further detail later along with the corresponding configuration .

First, the turbulator 142 will be described. The combustor 100 may further include the turbulators 142 protruding radially outwardly from the outer surface of the liner 140 or radially inwardly from the inner surface of the shroud 170 toward the cooling flow path 170P. As illustrated in FIG. 4, the turbulator 142 may protrude from the outer surface of liner 140. However, the present invention is not necessarily limited thereto. Therefore, the cooling fluid flowing through the cooling flow path 170P along the longitudinal direction may generate turbulent flow as it collides with the turbulators 142.

In particular, the liner 140 may include the turbulator 142. The above-mentioned liner 140 may include a flow path forming portion 141 configured to define the cooling flow path 170P. The turbulator 142 may protrude from the flow path forming portion 141. Because the turbulators 142 are intended to affect the cooling fluid flowing along the cooling flow path 170P, the turbulators 142 may be formed on the flow path forming portion 141 that defines the cooling flow path 170P.

The turbulator 142 may be formed to protrude in a direction perpendicular to the longitudinal direction of the cooling flow path 170P along which the cooling fluid flows. For example, as illustrated in FIG. 5, the turbulator 142 may extend in a circumferential direction of the liner 140. Therefore, the turbulator 142 protrudes in a direction that perpendicularly blocks (i.e., obstructs) the movement of the cooling fluid flowing along the cooling flow path 170P in the longitudinal direction of the liner 140, which may further activate or promote the transition to turbulent flow in the cooling flow path 170P.

According to an embodiment, in order to activate the transition of the cooling fluid to the turbulent flow in case that the cooling fluid flowing along the cooling flow path 170P flows in a direction having a predetermined angle with respect to the longitudinal direction of the cooling flow path 170P, an extension direction of the turbulator 142 may have a predetermined angle with respect to the longitudinal direction and the circumferential direction of the liner 140 in consideration of a predetermined angle defined between the cooling fluid and the cooling flow path 170P.

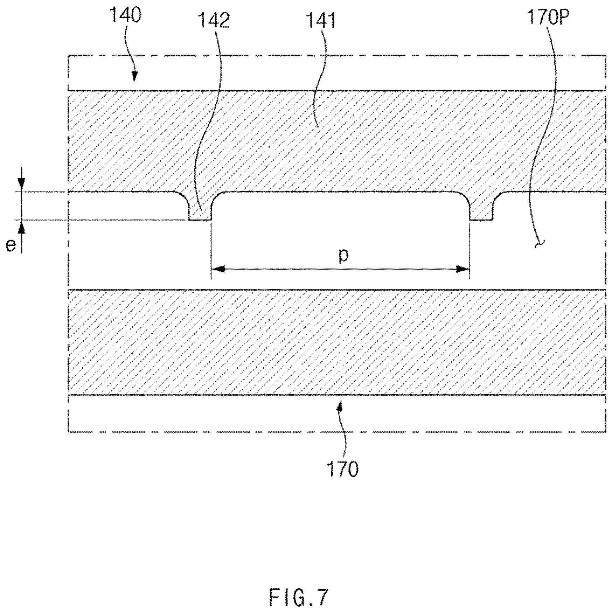

The turbulators 142 may be provided as a plurality of turbulators 142 arranged at predetermined intervals in the longitudinal direction of the cooling flow path 170P. Therefore, the transition of the cooling fluid to the turbulent flow may be implemented continuously or may be performed repeatedly in the longitudinal direction of the cooling flow path 170P. A relationship between a protrusion degree of the turbulator 142 and an interval between the plurality of turbulators 142 will be described more specifically with reference to FIGS. 7 to 8.

According to the invention, the shroud 170 includes the swirler 171 configured to form a swirl in the inlet flow path 171P, which is configured to communicate with an inlet of the cooling flow path 170P. Here, the term "swirl" is to be interpreted as understood by a person skilled in the art. Various structures may generate swirls, and the present invention encompasses all configurations capable of forming swirls. In one embodiment, as illustrated in FIG. 4 and FIG. 6, an inner surface of the swirler 171 may define the inlet flow path 171P, and the inlet flow path 171P may be formed to extend through the shroud 170 from its outer surface to its inner surface. The extension direction of the inlet flow path 171P may be inclined with respect to the longitudinal direction of the cooling flow path 170P. For example, based on FIG. 6, the inlet flow path 171P may extend in a direction made by adding a component in a leftward/rightward direction to a direction directed downward with respect to the cooling flow path 170P. That is, the inlet flow path 171P may be extended in a direction made by combining two directions perpendicular to the longitudinal direction of the cooling flow path 170P. Therefore, the direction of the cooling fluid is switched when the cooling fluid flowing along the inlet flow path 171P flows along the cooling flow path 170P, and the swirl may be formed during this process. For another example, referring to FIG. 4, the front side surface and the rear side surface of the inlet flow path 171P may have a curved shape to generate the swirl. Additionally, the swirler 171 may be formed by milling.

According to the invention, a distance between two farthest points on a cross-sectional area of the swirler 171 (e.g., a distance between the front side surface and the rear side surface of the inlet flow path 171P) is equal to or larger than a height of the cooling flow path 170P. The height of the cooling flow path 170P may mean the size of the gap between the outer surface of the liner 140 and the inner surface of the shroud 170. In other words, a cross-sectional area of the inlet flow path 171P may be larger than a cross-sectional area of the cooling flow path 170P corresponding to the cross-sectional area of the inlet flow path 171P. The cross-sectional area of the inlet flow path 171P may be based on a plane perpendicular to an extension direction of the inlet flow path 171P. Because one cooling flow path 170P may correspond to several inlet flow paths 171P, an overall cross-sectional area of the cooling flow path 170P may be larger than a cross-sectional area of one inlet flow path 171P. However, a substantial flow path cross-sectional area of the actual cooling flow path 170P, along which the cooling fluid flowing out of the actual inlet flow path 171P, may be smaller than the cross-sectional area of the inlet flow path 171P. Because the cross-sectional area of the inlet flow path 171P is larger than the cross-sectional area of the cooling flow path 170P, a flow rate in the inlet flow path 171P may be lower than a flow rate in the cooling flow path 170P. That is, the pressure of the cooling fluid in the cooling flow path 170P is lower than the pressure of the cooling fluid flowing along the inlet flow path 171P. The cooling fluid may be naturally moved from the inlet flow path 171P to the cooling flow path 170P by a difference in pressure. Therefore, the cooling fluid may be naturally moved to the inlet flow path 171P without a device that provides separate driving power.

An outlet flow path 172P of the cooling flow path 170P may extend in the longitudinal direction of the cooling flow path 170P. In comparison with the comparative example, the number of outlet flow paths 172P may be reduced, and the amount of air moving to the combustion chamber 140S may be reduced. Further, the air injected into the combustion chamber 140S is injected in the longitudinal direction, in which the injected air deviates from the flame in the combustion chamber, such that the amount of air participating in the combustion reaction may be reduced. Therefore, it is possible to reduce the amount of nitrogen oxide produced in the combustion chamber 140S.

As illustrated in FIG. 4, at least a part of the cooling flow path 170P may have a section in which a cross-sectional area decreases in a direction from the upstream side to the downstream side based on a direction in which the cooling fluid configured to flow along the cooling flow path 170P flows in the cooling flow path 170P. The cross-sectional area of the cooling flow path 170P may be based on a plane perpendicular to the longitudinal direction. That is, the gap between the outer surface of the liner 140 and the inner surface of the shroud 170 may gradually narrow in stages. Therefore, it is possible to reduce the amount of air to be provided to the combustion chamber 140S. In particular, because the air flowing along the cooling flow path 170P is neither ideal air nor laminar flow, the amount of air to be provided to the combustion chamber 140S may be reduced as the cross-sectional area of the cooling flow path 170P decreases. Further, because the cross-sectional area decreases at the downstream side, the pressure of the cooling fluid is lower at the downstream side than at the upstream side, like the above-mentioned relationship between the inlet flow path 171P and the cooling flow path 170P, such that the air may be naturally moved from the upstream side to the downstream side by the difference in pressure.

The cross-sectional area of the cooling flow path 170P may decrease by at least one stepped portion 174. Therefore, the transition of the flow of the cooling fluid to the turbulent flow may be further activated. Further, the process of reducing the cross-sectional area may be facilitated by forming the stepped portion. For example, one surface of the shroud 170 configured to define the cooling flow path 170P may be referred to as a first cooling flow path surface 170Aa, and one surface of the shroud 170 positioned at a downstream side of the first cooling flow path surface 170Aa may be referred to as a second cooling flow path surface 170Ab. In this case, the second cooling flow path surface 170Ab may be positioned to be closer to the liner 140 than the first cooling flow path surface 170Aa to the liner 140. In other words, the distance between the liner 140 and the first cooling flow path surface 170Aa may be larger than the distance between the liner 140 and the second cooling flow path surface 170Ab. Further, the first cooling flow path surface 170Aa may be positioned adjacent to the second cooling flow path surface 170Ab while forming the stepped portion 174 together with the second cooling flow path surface 170Ab. In other words, a stepped portion 174 may be formed between the first cooling flow path 170Aa and the second cooling flow path 170Ab.

The section in which the cross-sectional area of the cooling flow path 170P decreases may correspond to a section in which the turbulators 142 are formed. That is, the plurality of turbulators 142 may be formed in the section in which the cross-sectional area of the cooling flow path 170P decreases. As illustrated in FIG. 4, a portion of the cooling flow path 170P connected directly to the inlet flow path 171P may have a larger cross-sectional area than a portion disposed at a downstream side of the cooling flow path 170P. The turbulators 142 may be formed at a portion where the cross-sectional area decreases in the direction directed toward the downstream side. This is because the cross-sectional area needs to decrease and the turbulent flow needs to be formed to reduce the amount of air flowing to the combustion chamber 140S.

With reference to FIG. 5, the combustor according to the present invention may further include a strut 173 disposed between the shroud 170 and the liner 140 and configured to support the shroud 170 and the liner 140. The strut 173 may have a cylindrical shape. The strut 173 may be positioned at the downstream side of the cooling flow path 170P. That is, the strut 173 may be formed adjacent to the outlet flow path 172P. As illustrated in FIG. 4, because the shroud 170 and the liner 140 structurally combines each other at the front end side of the shroud 170, the structural interval or gap between the liner 140 and the shroud 170 at the front end side of the cooling flow path 170P is relatively better maintained without struts. However, because the liner 140 and the shroud 170 do not structurally combine or support each other at the rear side end of the cooling flow path 170P, the strut 173 is provided to maintain the height of the cooling flow path 170P and the gap or intervale between the liner 140 and the shroud 170.

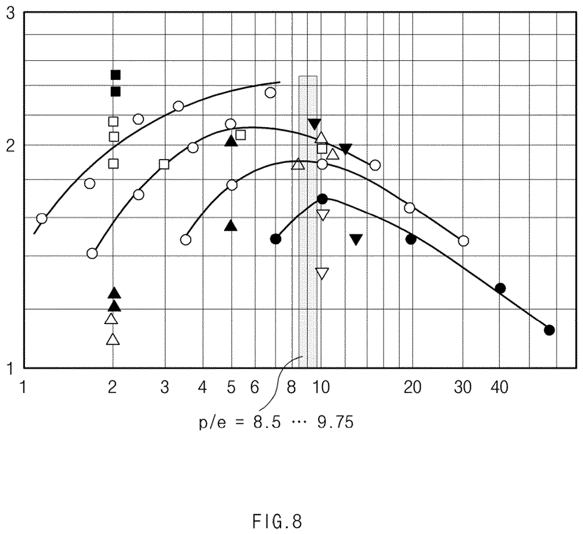

FIG. 7 is an enlarged cross-sectional view illustrating the turbulators 142 illustrated in FIG. 4. FIG. 8 is a graph related to cooling efficiency with respect to protruding heights of and intervals between the plurality of turbulators 142 illustrated in FIG. 7.

The turbulator 142 according to the embodiment of the present invention will be described with reference to FIGS. 7 to 8.

As illustrated in FIG. 4, the turbulators 142 may be provided as a plurality of turbulators 142. Of course, the protruding heights of the plurality of turbulators 142 may be different from one another, and the intervals between the adjacent turbulators 142 may also be different from one another. However, hereinafter, the description will be based on the assumption that the protruding heights of the turbulators 142 are equal to one another, and the intervals between the adjacent turbulators 142 are also equal to one another.

A length by which each of the plurality of turbulators 142 protrudes may be defined as e, and an interval between the plurality of turbulators 142 may be defined as p. FIG. 8 is a graph that summarizes experiments performed to find efficient values of e and p. The x-axis corresponds to a value of p/e, and the y-axis corresponds to the Nusselt number. More specifically, the ratios of the Nusselt numbers indicated on the y-axis are made by dividing the Nusselt number in the turbulent flow by the Nusselt number in the laminar flow. It can be seen that the cooling efficiency increases as the ratio of the Nusselt numbers increases. With reference to the graph, it can be seen that the cooling efficiency is high when the ratio of e to p is 8 or more and 10 or less. Therefore, the ratio of e to p according to the embodiment of the present invention may be 8 or more and 10 or less.

Hereinafter, embodiments different from the first embodiment will be described. The contents common to those in the first embodiment will be omitted as much as possible, and the description of the other embodiments will focus on the differences. That is, it is evident that the contents, not described in the other embodiments, may be supplemented by the contents in the first embodiment, where appropriate.

### Second Embodiment

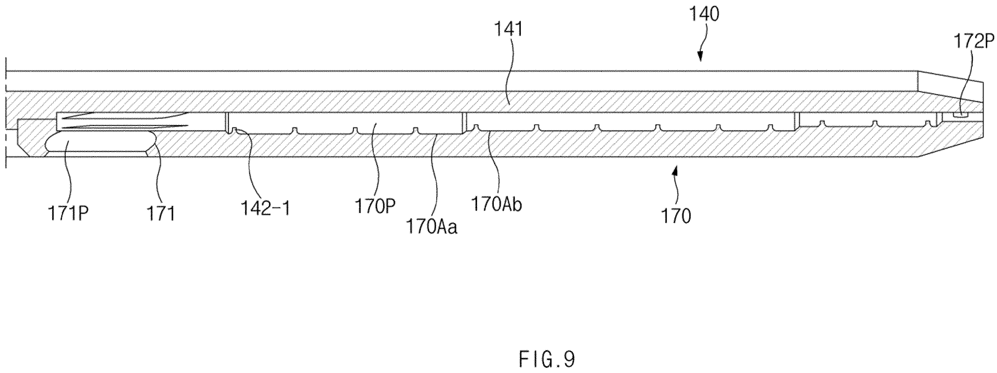

FIG. 9 is a cross-sectional view illustrating the liner 140 and the shroud 170 according to the second embodiment of the present invention.

A turbulator 142-1 according to the second embodiment of the present invention will be described with reference to FIG. 9.

The second embodiment differs from the first embodiment in terms of an extension starting position of the turbulator 142-1.

The turbulator 142-1 may extend from the shroud 170 rather than from the liner 140. In this case, the shroud 170 and the turbulator 142-1 may be integrated.

### Third Embodiment

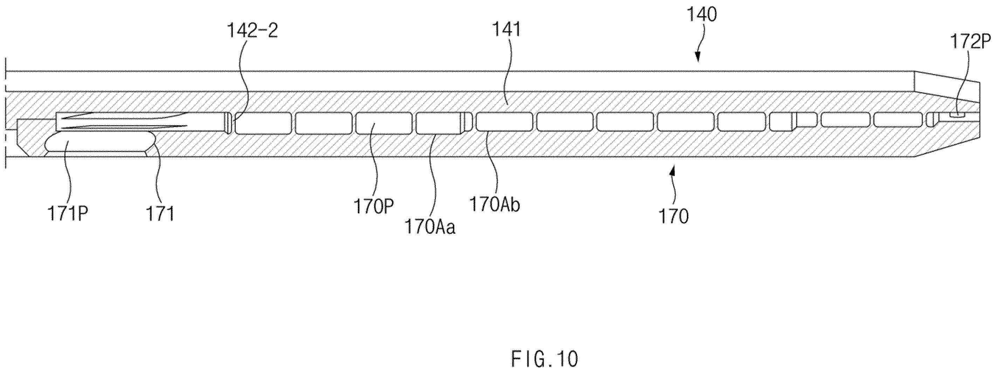

FIG. 10 is a cross-sectional view illustrating the liner 140 and the shroud 170 according to the third embodiment of the present invention.

A turbulator 142-2 according to the third embodiment of the present invention will be described with reference to FIG. 10.

The third embodiment differs from the first embodiment in that the shape of the turbulator 142-2 in the third embodiment differs from that in the first embodiment.

The turbulator 142-2 may extend from the liner 140 to the shroud 170. In this case, the turbulator 142-2 may have at least one hole through which the cooling fluid may pass. The turbulator 142-2 may be in the form of an annual panel having the at least one hole.

The hole of the turbulator 142, through which the cooling fluid may pass, may be formed at a height in the radial direction different from that of the hole of the adjacent turbulator 142-2, such that the transition of the cooling fluid to the turbulent flow may be further activated.

### Fourth Embodiment

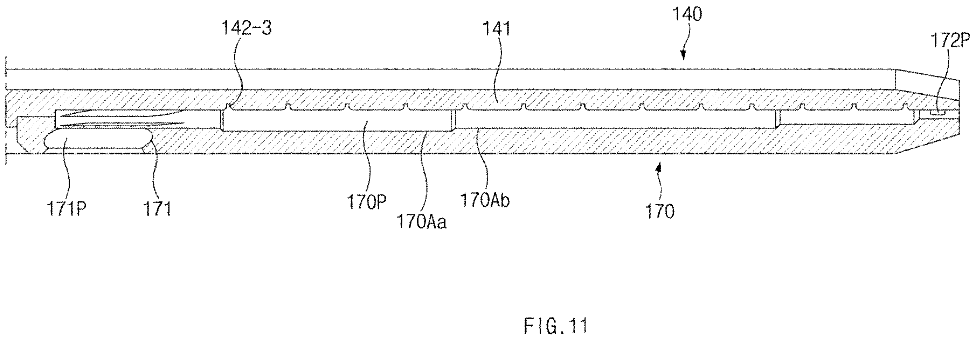

FIG. 11 is a cross-sectional view illustrating the liner 140 and the shroud 170 according to the fourth embodiment of the present invention.

A turbulator 142-3 according to the fourth embodiment of the present invention will be described with reference to FIG. 11.

The fourth embodiment differs from the first embodiment in that the shape of the turbulator 142-3 in the fourth embodiment differs from that in the first embodiment.

The turbulator 142-3 may be provided as a concave groove. The turbulator 142-3 may be provided as a groove so that the cooling fluid accommodated in the groove may transition to the turbulent flow. The turbulator 142-3 in the third embodiment is advantageous in reducing a loss of energy of the fluid in comparison with the turbulator 142 in the first embodiment.

### Fifth Embodiment

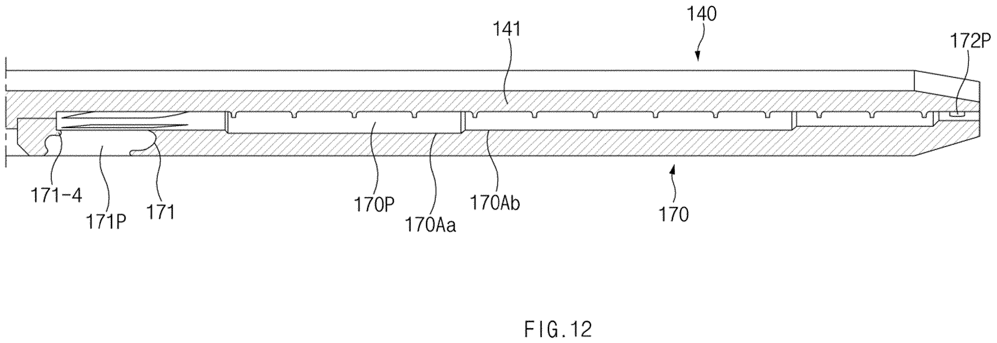

FIG. 12 is a cross-sectional view illustrating the liner 140 and the shroud 170 according to the fifth embodiment of the present invention.

A swirler 171-4 according to the fifth embodiment of the present invention will be described with reference to FIG. 12.

The fifth embodiment differs from the first embodiment in that the shape of the swirler 171-4 in the fifth embodiment differs from that in the first embodiment.

The swirler 171-4 may have a protruding shape. The swirler 171-4 may have a protruding shape. The swirler 171-4 may extend in a direction that is rotational with respect to the extended direction of the inlet flow path 171P, using the extended direction of the inlet flow path 171P as the axis of rotation, and may have a shape that protrudes toward the axis of rotation.

Further, the swirler 171-4 may have a groove shape. The above-mentioned description of the extension direction of the protruding shape may be equally applied to the extension direction of the groove.

### Sixth Embodiment

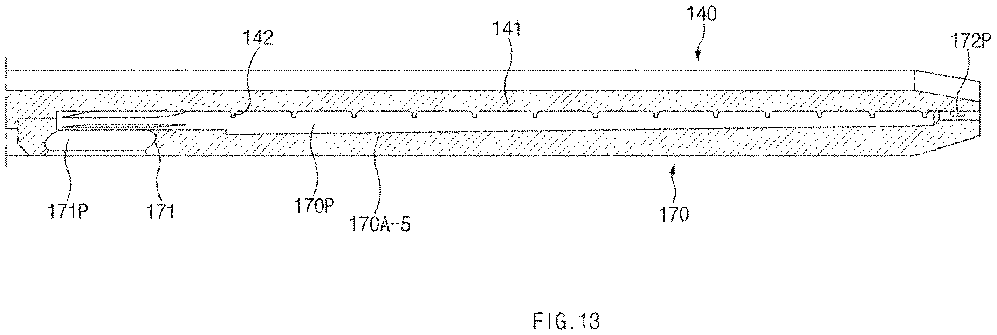

FIG. 13 is a cross-sectional view illustrating the liner 140 and the shroud 170 according to the sixth embodiment of the present invention.

A cooling flow path surface 170A-5 according to the sixth embodiment of the present invention will be described with reference to FIG. 13.

The sixth embodiment differs from the first embodiment in that a method of reducing the cross-sectional area of the cooling flow path 170P does not form a stepped portion.

The cooling flow path 170P may include a section in which a cross-sectional area gradually decreases from the upstream side to the downstream side without a stepped portion. To this end, the cooling flow path surface 170A-5 of the shroud 170 may become closer to the liner 140 toward the downstream side. As illustrated in FIG. 13, the cooling flow path surface 170A-5 may be inclined linearly. Alternatively, the cooling flow path surface 170A-5 may have a curved surface having a variable gradient, unlike the configuration illustrated in FIG. 13.

### Seventh Embodiment

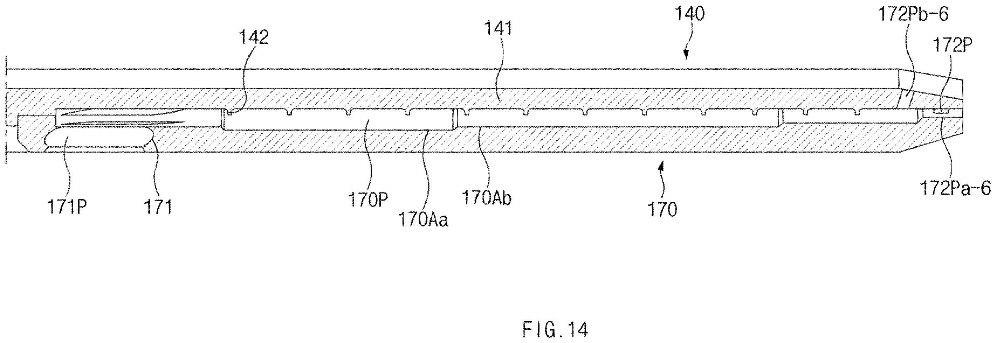

FIG. 14 is a cross-sectional view illustrating the liner 140 and the shroud 170 according to the seventh embodiment of the present invention.

The outlet flow path 172P according to the seventh embodiment of the present invention will be described with reference to FIG. 14.

The seventh embodiment differs from the first embodiment in that the number of outlet flow paths 172P and the direction of the outlet flow path 172P are different from those in the first embodiment.

The outlet flow path 172P may include a first outlet flow path 172Pa-6 described in the first embodiment, and a second outlet flow path 172Pb-6 extending at a predetermined angle with respect to an extension direction of the first outlet flow path 172Pa-6. Because the extension direction of the second outlet flow path 172Pb-6 is directed toward the combustion chamber 140S, the second outlet flow path 172Pb-6 may introduce the air toward the flame.

Unless explicitly stated otherwise, the embodiments described above may be combined with other embodiments. Alternatively, unless it is clearly limited in combining one embodiment with another embodiment, it should be interpreted that combinations of embodiments are possible. The combination of any embodiment and another embodiment is considered to be disclosed herein. In other words, any one feature of an embodiment of the present invention described in the specification may be applied to another embodiment of the present invention. Similarly, the present invention encompasses any embodiment that combines features of one embodiment and features of another embodiment.

The present invention has been described with reference to the limited embodiments and the drawings, but the present invention is not limited thereby. The present invention may be carried out in various forms by those skilled in the art, to which the present invention pertains, within the scope defined by the appended claims.

### [Description of Reference Numerals]

1: Gas turbine
10: Compressor
20: Turbine
100: Combustor
110: Nozzle
111: Nozzle housing
140: Liner
140S: Combustion chamber
141: Flow path forming portion
142: Turbulator
150: Flow sleeve
160: Transition piece
170: Shroud
170P: Cooling flow path
170A: Cooling flow path surface
170Aa: First cooling flow path surface
170Ab: Second cooling flow path surface
171: Swirler
171P: Inlet flow path
172P: Outlet flow path
172Pa: First outlet flow path
172Pb: Second outlet flow path
173: Strut

## Claims

1. A combustor (100) comprising:
a liner (140) configured to define a combustion chamber (140S) and extending in a longitudinal direction;
a transition piece (160) configured to overlap an end of the liner (140) while being spaced apart from the end of the liner (140) at a predetermined spacing distance, the transition piece (160) extending in the longitudinal direction of the liner (140); and
a shroud (170) disposed between the liner (140) and the transition piece (160) and coupled to the liner (140),
wherein the liner (140) and an inner surface of the shroud (170) define a cooling flow path (170P), and
wherein the cooling flow path (170P) is formed with a turbulator (142) to allow the air, which flows in the cooling flow path (170P), to flow as a turbulent flow in order to dissipate heat from the liner (140),
**characterized in that**
the shroud (170) comprises a swirler (171) in an inlet flow path (171P) to form a swirl in the inlet flow path (171P), which communicates with an inlet of the cooling flow path (170P), wherein the inlet flow path (171P) comprises a front side surface and a rear side surface, and
wherein a distance between two farthest points on a cross-sectional area of the swirler (171), namely the distance between the front side surface and the rear side surface of the inlet flow path (171P), is equal to or larger than a height of the cooling flow path (170P).

2. The combustor (100) of claim 1, wherein
the turbulator protrudes from the liner (140) or the inner surface of the shroud (170) toward the cooling flow path (170P).

3. The combustor (100) of claim 2, wherein the turbulator (142) is included in the liner (140), and the liner (140) comprises a flow path forming portion (141) configured to define the cooling flow path (170P), and the turbulator protrudes from the flow path forming portion (141).

4. The combustor (100) of claim 2, wherein the turbulator (142) is formed to protrude perpendicularly to a longitudinal direction of the cooling flow path (170P).

5. The combustor (100) of claim 2, wherein the turbulator (142) is provided as a plurality of turbulators (142) arranged at predetermined intervals in a longitudinal direction of the cooling flow path (170P).

6. The combustor (100) of claim 5, wherein, when a length by which each of the plurality of turbulators protrudes is defined as e, and an interval between the plurality of turbulators (142) is defined as p, a ratio of e to p is 8 or more and 10 or less.

7. The combustor (100) of claim 1, wherein an inner surface of the swirler (171) defines the inlet flow path (171P), and the inlet flow path (171P) has an extension direction inclined with respect to a longitudinal direction of the cooling flow path (170P).

8. The combustor (100) of claim 1, wherein the inlet flow path (171P) has an extension direction that is a direction made by combining two directions perpendicular to a longitudinal direction of the cooling flow path (170P).

9. The combustor (100) of claim 1, wherein an outlet flow path (172P) of the cooling flow path (170P) extends in a longitudinal direction of the cooling flow path (170P).

10. The combustor (100) of claim 1, wherein at least a part of the cooling flow path (170P) has a section in which a cross-sectional area decreases in a direction from an upstream side to a downstream side based on a direction in which a cooling fluid configured to flow along the cooling flow path (170P) flows in the cooling flow path (170P).

11. The combustor (100) of claim 10, wherein the section in which the cross-sectional area of the cooling flow path (170P) decreases is provided by forming a stepped portion (174).

12. The combustor (100) of claim 10,
wherein the turbulator protrudes from the liner (140) or the inner surface of the shroud (170) toward the cooling flow path (170P),
wherein the section in which the cross-sectional area of the cooling flow path (170P) decreases corresponds to a section in which the turbulator (142) is formed.

13. The combustor (100) of claim 1, further comprising:
a strut (173) disposed at a rear side of the liner (140) and between the shroud (170) and the liner (140) and configured to support the shroud (170) and the liner (140).

## Patentansprüche

1. Brennkammer (100), umfassend:
eine Auskleidung (140), die dazu ausgebildet ist, einen Brennraum (140S) zu definieren, und sich in einer Längsrichtung erstreckt;
ein Übergangsstück (160), das dazu ausgebildet ist, ein Ende der Auskleidung (140) zu überlappen, während es von dem Ende der Auskleidung (140) um einen vorbestimmten Abstand beabstandet ist, wobei sich das Übergangsstück (160) in der Längsrichtung der Auskleidung (140) erstreckt; und
eine Ummantelung (170), die zwischen der Auskleidung (140) und dem Übergangsstück (160) angeordnet und mit der Auskleidung (140) gekoppelt ist,
wobei die Auskleidung (140) und eine Innenfläche der Ummantelung (170) einen Kühlströmungsweg (170P) definieren, und
wobei der Kühlströmungsweg (170P) mit einem Turbulator (142) ausgebildet ist, um es der Luft, die in dem Kühlströmungsweg (170P) strömt, zu ermöglichen, als turbulente Strömung zu strömen, um Wärme von der Auskleidung (140) abzuführen,
**dadurch gekennzeichnet, dass**
die Ummantelung (170) einen Drallerzeuger (171) in einem Einlassströmungsweg (171P) umfasst, um in dem Einlassströmungsweg (171P), der mit einem Einlass des Kühlströmungswegs (170P) in Verbindung steht, einen Drall zu bilden, wobei der Einlassströmungsweg (171P) eine vordere Seitenfläche und eine hintere Seitenfläche umfasst, und
wobei ein Abstand zwischen zwei am weitesten voneinander entfernten Punkten auf einer Querschnittsfläche des Drallerzeugers (171), nämlich der Abstand zwischen der vorderen Seitenfläche und der hinteren Seitenfläche des Einlassströmungswegs (171P), gleich einer Höhe des Kühlströmungswegs (170P) oder größer als diese ist.

2. Brennkammer (100) nach Anspruch 1, wobei
der Turbulator von der Auskleidung (140) oder der Innenfläche der Ummantelung (170) in Richtung des Kühlströmungswegs (170P) hervorsteht.

3. Brennkammer (100) nach Anspruch 2, wobei der Turbulator (142) in der Auskleidung (140) enthalten ist und die Auskleidung (140) einen strömungswegbildenden Abschnitt (141) umfasst, der dazu ausgebildet ist, den Kühlströmungsweg (170P) zu definieren, und der Turbulator von dem strömungswegbildenden Abschnitt (141) hervorsteht.

4. Brennkammer (100) nach Anspruch 2, wobei der Turbulator (142) dazu ausgebildet ist, senkrecht zu einer Längsrichtung des Kühlströmungswegs (170P) hervorzustehen.

5. Brennkammer (100) nach Anspruch 2, wobei der Turbulator (142) als eine Vielzahl von Turbulatoren (142) vorgesehen ist, die in vorbestimmten Abständen in einer Längsrichtung des Kühlströmungswegs (170P) angeordnet sind.

6. Brennkammer (100) nach Anspruch 5, wobei, wenn eine Länge, um die jeder der Vielzahl von Turbulatoren hervorsteht, als e definiert ist und ein Abstand zwischen der Vielzahl von Turbulatoren (142) als p definiert ist, ein Verhältnis von e zu p 8 oder mehr und 10 oder weniger beträgt.

7. Brennkammer (100) nach Anspruch 1, wobei eine Innenfläche des Drallerzeugers (171) den Einlassströmungsweg (171P) definiert und der Einlassströmungsweg (171P) eine Erstreckungsrichtung aufweist, die gegenüber einer Längsrichtung des Kühlströmungswegs (170P) geneigt ist.

8. Brennkammer (100) nach Anspruch 1, wobei der Einlassströmungsweg (171P) eine Erstreckungsrichtung aufweist, die eine Richtung ist, die durch Kombinieren zweier zu einer Längsrichtung des Kühlströmungswegs (170P) senkrechter Richtungen gebildet wird.

9. Brennkammer (100) nach Anspruch 1, wobei sich ein Auslassströmungsweg (172P) des Kühlströmungswegs (170P) in einer Längsrichtung des Kühlströmungswegs (170P) erstreckt.

10. Brennkammer (100) nach Anspruch 1, wobei mindestens ein Teil des Kühlströmungswegs (170P) einen Bereich aufweist, in dem eine Querschnittsfläche in einer Richtung von einer stromaufwärtigen Seite zu einer stromabwärtigen Seite abnimmt, bezogen auf eine Richtung, in der ein Kühlfluid, das dazu ausgebildet ist, entlang des Kühlströmungswegs (170P) zu strömen, in dem Kühlströmungsweg (170P) strömt.

11. Brennkammer (100) nach Anspruch 10, wobei der Bereich, in dem die Querschnittsfläche des Kühlströmungswegs (170P) abnimmt, durch Ausbilden eines abgestuften Abschnitts (174) bereitgestellt wird.

12. Brennkammer (100) nach Anspruch 10,
wobei der Turbulator von der Auskleidung (140) oder der Innenfläche der Ummantelung (170) in Richtung des Kühlströmungswegs (170P) hervorsteht,
wobei der Bereich, in dem die Querschnittsfläche des Kühlströmungswegs (170P) abnimmt, einem Bereich entspricht, in dem der Turbulator (142) ausgebildet ist.

13. Brennkammer (100) nach Anspruch 1, ferner umfassend:
eine Strebe (173), die an einer hinteren Seite der Auskleidung (140) und zwischen der Ummantelung (170) und der Auskleidung (140) angeordnet ist und dazu ausgebildet ist, die Ummantelung (170) und die Auskleidung (140) zu stützen.

## Revendications

1. Chambre de combustion (100) comprenant :
une chemise (140) configurée pour définir une enceinte de combustion (140S) et s'étendant dans une direction longitudinale ;
une pièce de transition (160) configurée pour chevaucher une extrémité de la chemise (140) tout en étant espacée de l'extrémité de la chemise (140) d'une distance d'espacement prédéterminée, la pièce de transition (160) s'étendant dans la direction longitudinale de la chemise (140) ; et
une enveloppe (170) disposée entre la chemise (140) et la pièce de transition (160) et couplée à la chemise (140),
dans laquelle la chemise (140) et une surface intérieure de l'enveloppe (170) définissent un trajet d'écoulement de refroidissement (170P), et
dans laquelle le trajet d'écoulement de refroidissement (170P) est formé avec un turbulateur (142) pour permettre à l'air, qui s'écoule dans le trajet d'écoulement de refroidissement (170P), de s'écouler sous la forme d'un écoulement turbulent afin de dissiper la chaleur de la chemise (140),
**caractérisée en ce que**
l'enveloppe (170) comprend un générateur de tourbillon (171) dans un trajet d'écoulement d'entrée (171P) pour former un tourbillon dans le trajet d'écoulement d'entrée (171P), qui communique avec une entrée du trajet d'écoulement de refroidissement (170P), le trajet d'écoulement d'entrée (171P) comprenant une surface latérale avant et une surface latérale arrière, et
dans laquelle une distance entre deux points les plus éloignés l'un de l'autre sur une aire de section transversale du générateur de tourbillon (171), à savoir la distance entre la surface latérale avant et la surface latérale arrière du trajet d'écoulement d'entrée (171P), est égale ou supérieure à une hauteur du trajet d'écoulement de refroidissement (170P).

2. Chambre de combustion (100) selon la revendication 1, dans laquelle
le turbulateur fait saillie depuis la chemise (140) ou la surface intérieure de l'enveloppe (170) vers le trajet d'écoulement de refroidissement (170P).

3. Chambre de combustion (100) selon la revendication 2, dans laquelle le turbulateur (142) est inclus dans la chemise (140), et la chemise (140) comprend une partie formant un trajet d'écoulement (141) configurée pour définir le trajet d'écoulement de refroidissement (170P), et le turbulateur fait saillie depuis la partie formant un trajet d'écoulement (141).

4. Chambre de combustion (100) selon la revendication 2, dans laquelle le turbulateur (142) est formé pour faire saillie perpendiculairement à une direction longitudinale du trajet d'écoulement de refroidissement (170P).

5. Chambre de combustion (100) selon la revendication 2, dans laquelle le turbulateur (142) est prévu sous la forme d'une pluralité de turbulateurs (142) disposés à des intervalles prédéterminés dans une direction longitudinale du trajet d'écoulement de refroidissement (170P).

6. Chambre de combustion (100) selon la revendication 5, dans laquelle, lorsqu'une longueur de saillie de chacun des turbulateurs de la pluralité est définie comme e et qu'un intervalle entre la pluralité de turbulateurs (142) est défini comme p, un rapport de e à p est de 8 ou plus et de 10 ou moins.

7. Chambre de combustion (100) selon la revendication 1, dans laquelle une surface intérieure du générateur de tourbillon (171) définit le trajet d'écoulement d'entrée (171P), et le trajet d'écoulement d'entrée (171P) présente une direction d'extension inclinée par rapport à une direction longitudinale du trajet d'écoulement de refroidissement (170P).

8. Chambre de combustion (100) selon la revendication 1, dans laquelle le trajet d'écoulement d'entrée (171P) présente une direction d'extension qui est une direction formée par la combinaison de deux directions perpendiculaires à une direction longitudinale du trajet d'écoulement de refroidissement (170P).

9. Chambre de combustion (100) selon la revendication 1, dans laquelle un trajet d'écoulement de sortie (172P) du trajet d'écoulement de refroidissement (170P) s'étend dans une direction longitudinale du trajet d'écoulement de refroidissement (170P).

10. Chambre de combustion (100) selon la revendication 1, dans laquelle au moins une partie du trajet d'écoulement de refroidissement (170P) présente un tronçon dans lequel une aire de section transversale diminue dans une direction allant d'un côté amont à un côté aval, par rapport à une direction dans laquelle un fluide de refroidissement configuré pour s'écouler le long du trajet d'écoulement de refroidissement (170P) s'écoule dans le trajet d'écoulement de refroidissement (170P).

11. Chambre de combustion (100) selon la revendication 10, dans laquelle le tronçon dans lequel l'aire de section transversale du trajet d'écoulement de refroidissement (170P) diminue est prévu par la formation d'une partie étagée (174).

12. Chambre de combustion (100) selon la revendication 10,
dans laquelle le turbulateur fait saillie depuis la chemise (140) ou la surface intérieure de l'enveloppe (170) vers le trajet d'écoulement de refroidissement (170P),
dans laquelle le tronçon dans lequel l'aire de section transversale du trajet d'écoulement de refroidissement (170P) diminue correspond à un tronçon dans lequel le turbulateur (142) est formé.

13. Chambre de combustion (100) selon la revendication 1, comprenant en outre :
une entretoise (173) disposée au niveau d'un côté arrière de la chemise (140) et entre l'enveloppe (170) et la chemise (140) et configurée pour soutenir l'enveloppe (170) et la chemise (140).
